# EUROPEAN PATENT SPECIFICATION

(11) **EP 1 353 966 B1**
(45) Date of publication and mention of the grant of the patent: **01.02.2006**
(21) Application number: 01997511.9
(22) Date of filing: 19.11.2001
(51) Int. Cl.: C08F 220/18, H01J 29/28

(54) **AQUEOUS POLYMERIC DISPERSION AND APPLICATION IN CATHODIC TUBES**
WÄSSRIGE POLYMERDISPERSION UND ANWENDUNG IN KATHODENSTRAHLRÖHREN
DISPERSION POLYMERE AQUEUSE ET SON APPLICATION DANS DES TUBES CATHODIQUES

(30) Priority: 23.11.2000 IT MI20002527
(43) Date of publication of application: 22.10.2003
(73) Proprietor: Arkema, 92800 Puteaux (FR)
(72) Inventor: SAIJA, Léo, Mario, I-42011 Bagnola In Piano (IT); LUGLI, Mario, I-42042 Fabbricio (IT); BECCHI, Daniele, I-42100 Reggio Emilia (IT)
(74) Representative: Chaillot, Geneviève
(86) International application number: PCT/EP2001/013530
(87) International publication number: WO 2002/042343

(56) References cited:
- EP-A- 0 735 008
- DE-A- 1 804 159

## Description

The present invention relates to aqueous dispersions based on acrylic polymers which may be used to produce metal screens, by means of application to layers of electro-luminescent pigments in cathode ray tubes (CRTs).

It is well known that, in a CRT, an electron beam passes through a thin film of aluminium, generally of between 100 and 500 nm in thickness, and strikes the underlying layer of electro-luminescent pigments (phosphors), producing light rays which constitute the image viewed by the observer on the screen.

The reflective aluminum film acts like a mirror. In this way, the light radiation back-emitted from the luminescent pigments is not lost inside the CRT, but rather is totally reflected, through the glass screen, in the direction of the observer.

It is well known that the surface of the layer of electro-luminescent pigments has irregularities caused by the variability in the sizes of the phosphor particles, which can be up to about 1 µm in diameter, and by the application process used.

The aluminum film is deposited on the surface of the phosphors by the technique of vaporization under vacuum and becomes conformed to the underlying irregularities, also penetrating into the interstices between the phosphor particles. Then, if the layer of pigments has an irregular surface, a defective reflective surface is obtained.

It is known that, in order to have good reflection of light radiation, it is necessary for the irregularities present on the surface of the mirror to be very much smaller than the wavelength of the said light radiation, and, in any case, the luminosity and image definition are proportionately better the smoother the surface and the freer it is of irregularities.

To obtain this result, it is known practice to apply to the layer of electro-luminescent pigments, before the aluminum layer, a layer consisting of an organic polymer which can undergo thermal decomposition producing small amounts of residues, as described in patents US 3 067 055, US 3 582 390, US 3 652 323, US 4 954 366 and US 4 990 366. The polymer layer makes the surface of the phosphors uniform and prevents penetration of the aluminum into the interstices between the particles of electro-luminescent pigments. In this way, a smooth, uniform metal surface is obtained.

After the metallization stage, the thermal decomposition of the polymer layer is carried out by means of a high-temperature heating cycle as reported, for example, in EP 735 008 and USP 5 888 581, both in the name of the Applicant. During this stage, if the organic polymer has been formulated with suitable additives (see, for example, USP 5 800 234), the gases produced in the decomposition disperse through the micropores of the alumium film. The removal of the decomposition gases must take place as uniformly as possible, to avoid the production of cracks or blistering in the aluminum film (see patents US 5 922 394 and US 3 579 367), and in addition the amount of residual ash must be very low (USP 5 922 394 and 5 800 234). By working as described above, it is possible to obtain a relatively smooth aluminum surface with good luminosity characteristics.

It was seen that there is a need for aqueous polymer dispersions based on acrylic polymers which would be capable of producing even more uniform surfaces before the application of the aluminum layer, and then of minimizing the irregularities of the phosphor layer in an improved manner, to obtain a CRT with superior luminosity characteristics. Simultaneously, the dry residue obtained from the said aqueous dispersions must give an extremely uniform thermal decomposition to avoid the formation of cracks or blistering on the aluminum surface, and a considerably reduced amount of residual ash.

The Applicant has found, surprisingly and unexpectedly, that by using, in the preparation of CRT screens, polymer dispersions based on acrylic polymers as defined below, it is possible to obtain polymer films capable of providing a surface with small irregularities (roughness), such that the surface of the aluminium film which is deposited on the said polymer films is extremely smooth and brilliant.

One subject of the present invention is aqueous polymer dispersions based on acrylic polymers in which the diameter of the individual particles is between 50 nm and 1 000 nm, and the particle distribution by weight relative to the total dry weight is as follows :
a) from 50 nm to 180 nm : from 10% to 70%, preferably from 20% to 60%, more preferably in the range from 50 nm to 150 nm from 30% to 70%;
b) from > 180 nm to 1 000 nm : from 30% to 90%, preferably from 40% to 80%, more preferably in the range from 200 nm to 600 nm from 30% to 70% ;

the said aqueous dispersions based on acrylic polymers having a minimum film-forming temperature between about 1°C and 80°C, which, after drying, produce films which, when subjected to heating under a nitrogen atmosphere, show a weight loss, for films about 1 mm in thickness, and for the following heating cycle, which simulates the process for preparing CRTs :
11°C/minute from 25°C to 375°C,
5°C/minute from 375°C to 440°C,
isothermal at 440°C for 45 minutes,
respectively, of :
   from 25°C to 375°C from 40% to 70% by weight, preferably from 50% to 70% by weight,
   from 375°C to 440°C greater than 99% by weight,
   after the isothermal at 440°C, the remaining residue is less than about 0.1% by weight and preferably less than about 0.05% by weight.

The aqueous polymer dispersions based on acrylic polymers of the present invention may have a monomodal or multimodal particle distribution, provided that the conditions indicated above are respected.

The aqueous polymer dispersions or latices may be obtained either directly, using an emulsion polymerization process which gives the particle distribution indicated above, or by mixing aqueous dispersions or latices of different particle size.

The polymerization processes for obtaining the said dispersions directly may be of semi-continuous or batchwise type. Polymer populations with different particle size may be obtained by polymerization in the presence of a seed, which comprises as an essential stage the addition of dispersions, even with a different monomer composition, in predetermined stages of the polymerization process.

Alternatively, polymer populations with different particle diameters may be obtained by the renucleation techniques comprising the formation in the dispersion of new polymer particles of different diameter, by means of adding suitable surfactants during the polymerization process. Both these techniques are known to those skilled in emulsion polymerization.

The weight-average molecular weights Mw of the polymers of the said dispersions are generally between 50 000 and 500 000. The molecular weight distribution Mw/Mn, in which Mn is the number-average molecular weight, is generally between 3.5 and 6.0. The glass transition temperatures are generally between 0°C and 80°C.

Surfactants suitable to be used in the polymerization are, for example, alkane sulphonates, alkane sulphates, ethoxylated fatty alkyl sulphates, sulphosuccinates, alkylbenzenesulphonates, preferably ionic surfactants in the form of ammonium salts, or nonionic surfactants such as, for example, ethoxylated nonylphenol and ethoxylated fatty alcohols.

As initiator systems for this type of polymerization, mention may be made, for example, of the following : persulphates, tert-butyl hydroperoxide, hydrogen peroxide, optionally in combination with reducing agents, such as, for example, metabisulphites, ascorbic acid or sulphoxylated formaldehyde. The salts are preferably in the form of ammonium salts.

The temperatures used in the polymerization are within the range from 30°C to 90°C.

The aqueous polymer dispersions characterized by monomodal or multimodal particle distributions according to the present invention may be obtained by polymerization of one or more (meth)acrylic monomers, optionally in the presence of other monomers, for example vinyl monomers. Mention may be made, for example, of (meth)acrylic acid or salts thereof with ammonium or alkali metals, linear or possibly branched C₁-C₁₈ aliphatic (meth)acrylates, isobornyl (meth)acrylate, lauryl (meth)acrylate, oleyl (meth)acrylate, palmityl (meth)acrylate, stearyl (meth)acrylate, C₁-C₄ hydroxy esters of (meth)acrylic acid, for instance hydroxyethyl (meth)acrylate and hydroxypropyl (meth)acrylate, substituted or unsubstituted methacrylamides, substituted or unsubstituted styrene, vinyl acetate, vinyl esters of C₃-C₁₁ monocarboxylic acids, and monomers with amine functionality, for instance N,N'-dimethylamino(meth)acrylate. Other monomers may also be used, for instance maleic acid, fumaric acid, crotonic acid, itaconic acid, vinylsulphonic acid, acrylamido-2-methyl-1-propanesulphonic acid, phosphoethyl (meth) acrylic acid, or salts thereof with alkali metals or, preferably, with ammonium, or C₁-C₄ aliphatic esters thereof.

Preferably, methacrylic acid and compounds thereof are used.

Aqueous dispersions based on acrylic polymers which satisfy the criteria indicated above, and which are used in the process for forming cathode ray tubes, preferably have the following composition :

| | | |
|---|---|---|
| A1) | butyl methacrylate | 40-90 parts by weight |
| B1) | methyl methacrylate | 5-50 parts by weight |
| C1) | methacrylic acid | 0.5-5 parts by weight |
| D1) | ethyl acrylate | 4-15 parts by weight |

The percentages of A1), B1), C1) and D1) are intended to refer to the total amount of starting comonomers used in the emulsion polymerization process.

These are the preferred monomers.

Preferably, the polymers of the dispersions of the present invention are substantially non-crosslinked and non-crosslinkable under the conditions for preparing or synthesizing the dispersion and during the heat treatment indicated above which simulates the process for preparing CRTs.

Lauryl, decyl, undecyl, ethyl, propyl, ethylhexyl, etc. methacrylate may be used, for example, as component A1) instead of butyl methacrylate.

Polymerizable carboxylic acids such as acrylic acid, itaconic acid, etc. may be used as component C1) instead of methacrylic acid.

Butyl acrylate may be used as component D1).

The purpose of adding component D1) is to adjust the rate of decomposition to the desired level.

The weight ratio between the various monomer components must be such that it gives a minimum film-forming temperature of between about 1°C and 80°C.

Optionally, coalescing agents may be used.

Examples of coalescing agents are butyldiglycol acetate (BDGA) and propylene glycol monomethyl ether.

In order to obtain the polymer film, the suitably formulated dispersion is deposited on the phosphor layer and dried at a temperature above the minimum film-forming temperature.

When the minimum film-forming temperature is greater than 60°C, amounts of between 1% and 10% by weight of coalescing agents are added to the dispersion.

The above mentioned polymer films show a 60° gloss greater than 80% and a surface roughness less than 18 nm.

After the aluminization stage, the polymer film is thermally decomposed using the heating cycle indicated above, without formation of any cracks or blistering on the surface of the metal film.

As stated, the aqueous dispersions based on acrylic polymers of the invention are particularly suitable for preparing films to be used in processes for preparing cathode ray tubes, since the said films give surfaces that are less rough combined with superior gloss and, when subjected to the heating cycle indicated, they leave minimum amounts of residual ash at the end.

A number of illustrative examples of the present invention are given, by way of example.

### EXAMPLES

### CHARACTERIZATION OF THE POLYMER DISPERSIONS

### Determination of the particle diameter

A Coulter Nanosizer N4 Plus instrument, using the principle of light scattering applied to the Brownian motion of the particles, was used. About 4 ml of deionized water and a portion of the dispersion to be analyzed are transferred into a 4.5 ml polymethyl methacrylate cuvette, so as to have an intensity, expressed as the number of particles counted per second, of between 10⁴ and 10⁶.

Taking into account the parameters of temperature (20°C), viscosity and refractive index of the suspending medium (1.33 for distilled water), the mixture is left to come to thermostatic equilibrium for 3 minutes and the determination is then carried out using the following parameters: acquisition angle 90°, analysis time of 200 seconds.

### Preparation of the samples for the determination of the glass transition temperature (Tg), the heat stability under nitrogen and in air and the molecular weight distribution

An amount of dispersion is placed in an aluminum tank 5 cm in diameter and 0.7 cm deep, such that the thickness of the liquid is about 3 mm. The product is dried in an oven at 70°C for 12 hours. The film obtained has a thickness of about 1 mm.

### Determination of the glass transition (Tg)

The DSC (differential scanning calorimeter) used is a Perkin Elmer Pyris 1 instrument.

20-30 mg of the film as obtained above are introduced into a suitable aluminum pan. The sample is heated at a gradient of 20°C/min, in a flow of helium, from -100°C to +100°C. The glass transition temperature is measured in the mid-point of inflexion of the curve.

### Determination of the heat stability in nitrogen

A Mettler Toledo M3 thermal balance was used.

200 mg of the sample are loaded into an aluminum crucible and placed in the oven of the thermal balance, in which a flow of 20 litres/hour of nitrogen is maintained. The analysis is initiated 20 minutes after introducing the sample, so as to totally remove the oxygen present.

The heating is carried out according to the following modes :
- 11°C/min from 25°C to 375°C ;
- 5°C/min from 375°C to 440°C ;
- final isothermal at 440°C for 45 minutes.

At the start of the first stage and at the end of each of the three stages, the residual weight is calculated from the weight loss of the sample relative to the previous weight.

### Determination of the molecular weight distribution

The apparatus used is a Waters 510 liquid chromatograph.

80 mg of the sample are dissolved in 4 ml of chloroform. The solution obtained is injected into a liquid chromatograph, equipped with an Ultrastyragel 106, 105, 104 column (support: polystyrene crosslinked with divinylbenzene), refractive index detector, mobile phase: chloroform, calibration with samples of polystyrene of known molecular weight.

### Determination of the minimum film-forming temperature (MFFT)

The determination was carried out according to ASTM standard D 2354.

### Determination of the surface roughness

The determination was carried out on films prepared by depositing a thickness of 50 µm of dispersion onto degreased glass slides (thickness of the dried films: about 20 µm). To ensure good film formation, the dispersions were applied to the glass slides thermostatically equilibrated to 85°C and then subsequently maintained at this temperature for 2 minutes.

Micrographs of the surface were acquired by the technique of atomic force microscopy (AFM) which allows the depth of the irregularities present on the surface of a film to be measured.

The quadratic roughness (R_{q}) of the surface of the films was obtained by measurements carried out under the conditions described below :
scanning surface : 100 x 100 µm, Contact mode,
Cantilever of 0.12 N/m, scanning rate of 22 Hz.

### Determination of the 60° gloss

A film of the test dispersion was prepared in a wet thickness of 120 µm on Leneta® paper. After drying in an oven at a temperature of 85 °C for two minutes, a film with a thickness of about 60 µm is obtained.

The determination of the 60° gloss was carried out using a Zehtner ZMG60° instrument.

### EXAMPLE 1 (comparative)

2 355 g of deionized water and 10 g of ammonium alkyl sulphonate are transferred into a glass reactor fitted with a condenser, a stirrer, a temperature control system and inlets for nitrogen, for the initiator solutions and for feeding in the pre-emulsion, the air present in the void space of the reactor being removed by flushing with nitrogen. In another container, fitted with a stirrer (pre-emulsifier), an emulsion composed of 1 227 g of deionized water, 8.8 g of ammonium alkyl sulphonate, 1 859 g of n-butyl methacrylate, 1 516 g of methyl methacrylate, 258 g of ethyl acrylate and 75 g of methacrylic acid is prepared. When the mixture in the reactor is at a temperature of 78°C, 200 g of the monomer pre-emulsion prepared beforehand are added, followed by addition of 21 g of ammonium persulphate dissolved in 130 g of deionized water.

Once the initiation has been achieved, the temperature inside the reactor increases by 4-5°C. About one minute after reaching the maximum temperature, the remaining portion of the pre-emulsion is added at a constant feed rate to the contents of the reactor, over a period of two hours, while keeping the reaction mixture at a temperature of 82-84°C throughout the addition. Once the addition of the remaining portion of the pre-emulsion is complete, the temperature of the product is maintained at 82°C for 60 minutes and the contents of the reactor are then cooled to 50°C.

3 g of sodium formaldehyde sulphoxylate dissolved in 73 g of deionized water are added at this temperature, at a constant feed rate, over 45 minutes. The dispersion is then cooled to 35°C and the pH is corrected to a value of between 7.5 and 8 with 28 Be aqueous ammonia. 186 g of butyldiglycol acetate and 217 g of deionized water are added to bring the minimum film-forming temperature below 50°C.

The dispersion thus obtained, filtered through a screen of 36 mesh, has a pH of 7.6, a viscosity (determined using a Brookfield RVT viscometer, spindle II at 100 rpm) of 90 mPa.s, and a content of dry coagulum on a screen of 275 mesh of less than 200 ppm. The solid content (determined after drying in an oven for one hour at 105°C) is 46.5%.

The mean particle diameter is 148 nm and 96% of the particles have a diameter of between 50 nm and 180 nm.

The distribution is given in Table 1.

The 60° gloss, roughness and weight loss values at 375°C and 440°C for the film obtained from the dispersion are given in Table 2.

### EXAMPLE 2 (comparative)

The polymerization of Example 1 was repeated in the presence of an additional amount of anionic surfactant in the initiation stage (9.1 g of sodium dioctyl sulphosuccinate).

The dispersion obtained, filtered as in Example 1, has a pH of 7.8, a viscosity (determined as described in Example 1) of 126 mPa.s, a content of dry coagulum on a screen of 275 mesh of less than 200 ppm and a solid content of 46.5%.

The mean particle diameter is 120 nm and 100% of the particles have a diameter of between 50 nm and 180 nm.

The distribution is given in Table 1.

The 60° gloss, roughness and weight loss values at 375°C and 440°C for the film obtained from the dispersion are given in Table 2.

### EXAMPLE 3 (comparative)

The polymerization of Example 1 was repeated, reducing the amount of sodium alkyl sulphonate in the reactor to 0.75 g.

The dispersion thus obtained, filtered as in Example 1, has a pH of 7.9, a viscosity (determined as described in Example 1) of 75 mPa.s, and a content of dry coagulum on a screen of 275 mesh of less than 200 ppm. The solid content is 46.5%.

The mean particle diameter is 212 nm and 100% of the particles have a diameter greater than 180 nm and less than 1 000 nm.

The distribution is given in Table 1.

The 60° gloss, roughness and weight loss values at 375°C and 440°C for the film obtained from the dispersion are given in Table 2.

### EXAMPLE 4 (comparative)

The polymerization of Example 1 was repeated, omitting the addition of alkyl sulphonate to the reactor and transferring this aliquot to the pre-emulsion.

The dispersion obtained, filtered as in Example 1, has a pH of 8.0, a viscosity of 16 mPa.s, a content of dry coagulum on a screen of 275 mesh of less than 200 ppm and a solid content of 46.5%.

The mean particle diameter is 340 nm and 100% of the particles have a diameter greater than 180 nm and less than 1 000 nm.

The distribution is given in Table 1.

The 60° gloss, roughness and weight loss values at 375°C and 440°C for the film obtained from the dispersion are given in Table 2.

### EXAMPLE 5

500 g of the dispersion obtained in Example 2 were mixed with 500 g of the dispersion obtained in Example 3.

The dispersion obtained has a mean particle diameter of 192 nm and 50% of the particles have a diameter comprised between 50 nm and 180 nm.

The calculated distribution is given in Table 1.

The 60° gloss, roughness and weight loss values at 375°C and 440°C for the film obtained from the dispersion are given in Table 2.

### EXAMPLE 6

333 g of the dispersion obtained in Example 2 were mixed with 333 g of the dispersion obtained in Example 3 and with 333 g of the dispersion obtained in Example 4.

The mean particle diameter is 230 nm and 33.4% of the particles have a diameter comprised between 50 nm and 180 nm.

The calculated distribution is given in Table 1.

The 60° gloss, roughness and weight loss values at 375°C and 440°C for the film obtained from the dispersion are given in Table 2.

### EXAMPLE 7

500 g of the dispersion obtained in Example 1 were mixed with 500 g of the dispersion obtained in Example 4.

The dispersion obtained has a mean particle diameter of 250 nm and the amount of particles with a diameter comprised between 50 nm and 180 nm is 46% by weight.

The calculated distribution is given in Table 1.

The 60° gloss, roughness and weight loss values at 375°C and 440°C for the film obtained from the dispersion are given in Table 2.

**Table 1**

| Distribution of particle diameters (nm) in comparative Examples 1, 2, 3, 4 and 8 and in Examples 5, 6 and 7. The data in the table are expressed as percentages by weight. | | | | | | | |
|---|---|---|---|---|---|---|---|
| Particle diameter range (nm) | Ex. 1 compar. (%) | Ex. 2 compar. (%) | Ex. 3 compar. (%) | Ex. 4 compar. (%) | Ex.5 (%) | Ex.6 (%) | Ex.7 (%) |
| 0-50 | 0 | 0 | 0 | 0 | 0 | 0 | 0 |
| 51-100 | 0 | 42.6 | 0 | 0 | 21.3 | 14.2 | 0 |
| 101-150 | 92.0 | 57.4 | 0 | 0 | 28.7 | 19.2 | 46 |
| 151-200 | 8.0¹ | 0 | 0 | 0 | 0 | 0 | 4 |
| 201-250 | 0 | 0 | 100 | 0 | 50 | 33.3 | 0 |
| 251-300 | 0 | 0 | 0 | 0 | 0 | 0 | 0 |
| 301-350 | 0 | 0 | 0 | 99 | 0 | 33 | 49.5 |
| 351-400 | 0 | 0 | 0 | 1 | 0 | 0.3 | 0.5 |
| 401-450 | 0 | 0 | 0 | 0 | 0 | 0 | 0 |
| 451-1000 | 0 | 0 | 0 | 0 | 0 | 0 | 0 |

| | | | | | | | |
|---|---|---|---|---|---|---|---|
| ¹ 4% by weight of the particles have a diameter > 180 nm. | | | | | | | |

**Table 2**

| Particle distribution of the dispersions of the examples of the invention; gloss, roughness and weight loss on heating according to the cycle given in the invention, for the films obtained from the said dispersions | | | | | | |
|---|---|---|---|---|---|---|
| Ex. | Particle diameter distribution (nm) % by weight | | 60° gloss (%) | AFM roughness (nm) | Loss on drying (temp. in °C) | |
| | 50-180 nm | >180 <1000 nm | | | 375 | 440 |
| 1 compar. | 96 | 4 | 84 | 19.6 | 42 | 99.90 |
| 2 compar. | 100 | 0 | 87 | 19.0 | 44 | 99.95 |
| 3 compar. | 0 | 100 | 84 | 28.0 | 46 | 99.95 |
| 4 compar. | 0 | 100 | 53 | 34.5 | 47.5 | 100 |
| 5 | 50 | 50 | 83.5 | 10 | 67 | 100.00 |
| 6 | 33.4 | 66.6 | 86 | 11 | 61 | 100.00 |
| 7 | 48 | 52 | 84.5 | 13.5 | 59 | 99.95 |

## Claims

1. Aqueous polymer dispersions based on acrylic polymers in which the diameter of the individual particles is between 50 nm and 1 000 nm, and the particle distribution by weight relative to the total dry weight is as follows :
a) from 50 nm to 180 nm : from 10% to 70%, preferably from 20% to 60% ; preferably from 50 nm to 150 nm from 30% to 70% ;
b) from > 180 nm to 1 000 nm : from 30% to 90%, preferably from 40% to 80% ; preferably from 200 nm to 600 nm from 30% to 70% ;
the said aqueous dispersions based on acrylic polymers having a minimum film-forming temperature of between 1°C and 80°C, which, after drying, produce films which, when subjected to heating under a nitrogen atmosphere, show a weight loss, for films about 1 mm in thickness, and for the following heating cycle, which simulates the process for preparing cathode ray tubes (CRTs) :
11°C/minute from 25°C to 375°C,
5°C/minute from 375°C to 440°C,
isothermal at 440°C for 45 minutes,
respectively, of :
from 25°C to 375°C from 40% to 70% by weight, preferably from 50% to 70% by weight,
from 375°C to 440°C greater than 99% by weight,
after the isothermal stage at 440°C, the remaining residual ash being less than 0.1% by weight and
preferably less than 0.05% by weight.

2. Aqueous polymer dispersions based on acrylic polymers, according to Claim 1, having a monomodal or multimodal particle distribution.

3. Polymer dispersions according to Claims 1-2, which may be obtained using an emulsion polymerization process which gives the particle distribution indicated above, or by means of mixing aqueous dispersions of different particle diameter.

4. Polymer dispersions according to Claims 1-3, in which the polymers have a weight-average molecular weight Mw of between 50 000 and 500 000, a molecular weight distribution Mw/Mn, in which Mn is the number-average molecular weight, of between 3.5 and 6.0, and a glass transition temperature of between 0°C and 80°C.

5. Aqueous polymer dispersions according to Claims 1-4, which may be obtained by polymerization of one or more (meth)acrylic monomers, optionally in the presence of other monomers, preferably vinyl monomers.

6. Polymer dispersions according to Claims 1-5, having the following composition :
| | | |
|---|---|---|
| A1) | butyl methacrylate | 40-90 parts by weight |
| B1) | methyl methacrylate | 5-50 parts by weight |
| C1) | methacrylic acid | 0.5-5 parts by weight |
| D1) | ethyl acrylate | 4-15 parts by weight |
the percentages of A1), B1), C1) and D1) referring to the total amount of starting comonomers used in the emulsion polymerization process.

7. Polymer dispersions according to Claims 1-6, in which the polymers are substantially non-crosslinked and non-crosslinkable under the conditions for synthesizing the dispersion and during the heat treatment.

8. Polymer dispersions according to Claims 6-7, in which lauryl, decyl, undecyl, ethyl, propyl or ethylhexyl methacrylate are used as component A1) instead of butyl methacrylate; polymerizable carboxylic acids chosen from acrylic acid and itaconic acid are used as component C1) instead of methacrylic acid; butyl acrylate is used as component D1) instead of ethyl acrylate.

9. Polymer dispersions according to Claims 1-8, to which are added amounts of between 1% and 10% by weight of coalescing agents.

10. Polymer films which may be obtained by drying the dispersions of Claims 1-9, having a 60° gloss greater than 80% and a surface roughness of less than 18 nm.

11. Use of the aqueous dispersions based on acrylic polymers of Claims 1-9, in processes for preparing cathode ray tubes.

12. Cathode ray tubes prepared using the dispersions of Claims 1-9.

## Patentansprüche

1. Wäßrige Polymerdispersionen auf Basis von Acrylpolymeren, bei denen der Durchmesser der einzelnen Teilchen zwischen 50 nm und 1000 nm liegt und die gewichtsbezogene Teilchenverteilung, bezogen auf das Gesamttrockengewicht, folgendermaßen ist:
a) von 50 nm bis 180 nm: von 10 bis 70%, vorzugsweise von 20 bis 60%; vorzugsweise von 50 nm bis 150 nm von 30 bis 70%;
b) von > 180 nm bis 1000 nm: von 30 bis 90%, vorzugsweise von 40 bis 80%; vorzugsweise von 200 nm bis 600 nm von 30 bis 70%;
wobei die wäßrigen Polymerdispersionen auf Basis von Acrylpolymeren eine Mindestfilmbildungstemperatur zwischen 1°C und 80°C aufweisen, die nach dem Trocknen Filme ergeben, die beim Erhitzen unter Stickstoffatmosphäre für Filme mit einer Dicke von etwa 1 mm und für den folgenden Heizzyklus, der das Verfahren zur Herstellung von Kathodenstrahlröhren (CRTs) simuliert:
11°C/Minute von 25°C bis 375°C,
5°C/Minute von 375°C bis 440°C,
isotherm bei 440°C für 45 Minuten
einen Gewichtsverlust von:
von 25°C bis 375°C von 40 bis 70 Gew.-%, vorzugsweise von 50 bis 70 Gew.-% und von 375°C bis 440°C mehr als 99 Gew.-% aufweisen, wobei der Restaschegehalt nach der isothermen Stufe bei 440°C weniger als 0,1 Gew.-% und vorzugsweise weniger als 0,05 Gew.-% beträgt.

2. Wäßrige Polymerdispersionen auf Basis von Acrylpolymeren nach Anspruch 1 mit einer monomodalen oder multimodalen Teilchenverteilung.

3. Polymerdispersionen nach den Ansprüchen 1-2, die nach einem Emulsionspolymerisationsverfahren, das die oben angegebene Teilchenverteilung ergibt, oder durch Mischen von wäßrigen Dispersionen mit verschiedenem Teilchendurchmesser erhältlich sind.

4. Polymerdispersionen nach den Ansprüchen 1-3, bei denen die Polymere ein gewichtsmittleres Molekulargewicht Mw zwischen 50.000 und 500.000, eine Molekulargewichtsverteilung Mw/Mn, wobei Mn für das zahlenmittlere Molekulargewicht steht, zwischen 3,5 und 6 und eine Glasübergangstemperatur zwischen 0°C und 80°C aufweisen.

5. Wäßrige Polymerdispersionen nach den Ansprüchen 1-4, die durch Polymerisation eines oder mehrerer (Meth)acrylmonomere, gegebenenfalls in Gegenwart von anderen Monomeren, vorzugsweise Vinylmonomeren, erhältlich sind.

6. Polymerdispersionen nach den Ansprüchen 1-5 mit der folgenden Zusammensetzung:
| | | |
|---|---|---|
| A1) | Butylmethacrylat | 40-90 Gewichtsteile |
| B1) | Methylmethacrylat | 5-50 Gewichtsteile |
| C1) | Methacrylsäure | 0,5-5 Gewichtsteile |
| D1) | Ethylacrylat | 4-15 Gewichtsteile, |
wobei sich die Prozentanteile von A1), B1), C1) und D1) auf die Gesamtmenge der bei dem Emulsionspolymerisationsverfahren verwendeten Ausgangscomonomere beziehen.

7. Polymerdispersionen nach den Ansprüchen 1-6, bei denen die Polymere weitgehend unvernetzt und unter den Bedingungen für die Synthese der Dispersion und während der Wärmebehandlung unvernetzbar sind.

8. Polymerdispersionen nach den Ansprüchen 1-7, bei denen als Komponente A1) anstelle von Butylmethacrylat Lauryl-, Decyl-, Undecyl-, Ethyl-, Propyl- oder Ethylhexylmethacrylat verwendet wird; als Komponente C1) anstelle von Methacrylsäure unter Acrylsäure und Itaconsäure ausgewählte polymerisierbare Carbonsäuren verwendet werden und als Komponente D1) anstelle von Ethylacrylat Butylacrylat verwendet wird.

9. Polymerdispersionen nach den Ansprüchen 1-8, mit Koaleszenzmittelzusatz in Mengen zwischen 1 und 10 Gew.-%.

10. Durch Trocknen der Dispersionen gemäß den Ansprüchen 1-9 erhältliche Polymerfilme mit einem 60°-Glanz von mehr als 80% und einer Oberflächenrauhigkeit von weniger als 18 nm.

11. Verwendung der wäßrigen Dispersionen auf Basis von Acrylpolymeren gemäß den Ansprüchen 1-9 bei Verfahren zur Herstellung von Kathodenstrahlröhren.

12. Unter Verwednung der Dispersionen gemäß den Ansprüchen 1-9 hergestellte Kathodenstrahlröhren.

## Revendications

1. Dispersions aqueuses de polymères à base de polymères acryliques, dans lesquelles le diamètre des particules individuelles est compris entre 50 nm et 1000 nm et la distribution des particules en poids par rapport au poids sec total est comme suit :
a) de 50 nm à 180 nm : de 10% à 70%, de préférence de 20% à 60% ; de préférence de 50 nm à 150 nm de 30% à 70%;
b) de > 180 nm à 1000 nm : de 30% à 90%, de préférence de 40% à 80% ; de manière plus particulièrement préférée dans la plage de 200 nm à 600 nm de 30% à 70% ;
lesdites dispersions aqueuses à base de polymères acryliques présentant une température minimale de formation de film entre 1°C et 80°C, qui, après séchage, produisent des films qui, lorsqu'ils sont soumis à un chauffage sous une atmosphère d'azote, présentent une perte de poids, pour des films d'une épaisseur de 1 mm, et pour le cycle de chauffage suivant, qui simule le procédé de production de tubes cathodiques (CRT):
11°C/minute de 25°C à 375°C,
5°C/minute de 375°C à 440°C,
isotherme à 440°C pendant 45 minutes,
respectivement de :
de 25°C à 375°C de 40% à 70% en poids, de préférence de 50% à 70% en poids,
de 375°C à 440°C plus de 99% en poids,
après l'isotherme à 440°C, le résidu étant inférieur à 0,1% en poids et de préférence inférieur à 0,05% en poids.

2. Dispersions aqueuses de polymères à base de polymères acryliques, selon la revendication 1, présentant une distribution monomodale ou multimodale des particules.

3. Dispersions de polymères selon les revendications 1 à 2, qui peuvent être obtenues en utilisant un procédé de polymérisation dans une émulsion qui résulte dans la distribution de particules indiquées ci-dessus ou en mélangeant les dispersions aqueuses de particules présentant des diamètres différents.

4. Dispersions de polymères selon les revendications 1 à 3, dans lesquelles les polymères présentent un poids moléculaire pondéral M_{w} moyen entre 50000 et 500000, une distribution de poids moléculaires Mw/Mn, dans laquelle Mn est le poids moléculaire numérique moyen, entre 3,5 et 6,0, et une température de transition vitreuse entre 0°C et 80°C.

5. Dispersions aqueuses de polymères selon les revendications 1 à 4, qui peuvent être obtenues par polymérisation d'un ou de plusieurs monomères (méth)acryliques, éventuellement en présence d'autres monomères, de préférence des monomères de vinyle.

6. Dispersions de polymères selon les revendications 1 à 5, présentant la composition suivante :
| | | |
|---|---|---|
| A1) | méthacrylate de butyle | 40-90 parties en poids |
| B1) | méthacrylate de méthyle | 5-50 parties en poids |
| C1) | acide méthacrylique | 0,5-5 parties en poids |
| D1) | acrylate d'éthyle | 4-15 parties en poids, |
les pourcentages de A1), B1), C1) et D1) se référant à la quantité totale de comonomères de départ utilisés dans le procédé de polymérisation dans une émulsion.

7. Dispersions de polymères selon les revendications 1 à 6, dans lesquelles les polymères sont substantiellement non réticulés et non réticulables dans les conditions de synthèse de la dispersion et pendant le traitement thermique.

8. Dispersions de polymères selon les revendications 6 à 7, dans lesquelles on utilise du méthacrylate de lauryle, décyle, undécyle, éthyle, propyle ou éthylhexyle comme composant A1) au lieu du méthacrylate de butyle; des acides carboxyliques polymérisables choisis parmi l'acide acrylique et itaconique comme composant C1) au lieu de l'acide méthacrylique ; l'acrylate de butyle comme composant D1) au lieu de l'acrylate d'éthyle.

9. Dispersions de polymères selon les revendications 1 à 8, auxquelles sont ajoutées des quantités entre 1% et 10% en poids d'agents coalescents.

10. Films polymères qui peuvent être obtenus en séchant les dispersions selon les revendications 1 à 9, présentant une brillance à 60° supérieure à 80% et une rugosité de surface inférieure à 18 nm.

11. Utilisation des dispersions aqueuses à base de polymères acryliques selon les revendications 1 à 9 dans des procédés de fabrication de tubes cathodiques.

12. Tubes cathodiques fabriqués en utilisant les dispersions selon les revendications 1 à 9.
